# EUROPEAN PATENT SPECIFICATION

(11) **EP 1 159 360 B1**
(45) Date of publication and mention of the grant of the patent: **18.08.2004**
(21) Application number: 99959046.6
(22) Date of filing: 19.11.1999
(51) Int. Cl.: C09D 201/06, C08G 18/38, C09D 5/03

(54) **PARTICULATE CARBAMATE FUNCTIONAL COMPOUNDS AND POWDER COATINGS COMPRISING THE SAME**
TEILCHENFÖRMIGE CARBAMAT-FUNKTIONELLE VERBINDUNGEN UND DIESE ENTHALTENDE PULVERBESCHICHTUNGEN
COMPOSES PARTICULAIRES A GROUPE FONCTIONNEL CARBAMATE ET REVETEMENTS EN POUDRE LES CONTENANT

(30) Priority: 14.12.1998 US 211578
(43) Date of publication of application: 05.12.2001
(73) Proprietor: BASF CORPORATION, Southfield, MI 48034-2442 (US)
(72) Inventor: Savino, Thomas, Northville, MI 48167 (US); Ohrbom, Walter, Hartland Township, MI 48353 (US); McGee, John, Avon, IN 46123 (US); Rehfuss, John, Huntersville, NC 28078 (US); Gessner, Michael, West Bloomfield, MI 48322 (US)
(74) Representative: Fitzner, Uwe, Dr.
(86) International application number: PCT/US1999/027521
(87) International publication number: WO 2000/036035

(56) References cited:
- EP-A- 0 661 315
- US-A- 5 336 566
- US-A- 5 726 254

## Description

### Field of the Invention

The present invention relates to solid carbamate functional compounds, and powder coating compositions using the same. The invention provides a carbamate functional compound (a) of the formula R(X)_{y} and having a T_{g}≥ 30°C , wherein X is a carbamate functional group, y≥2, and R(X)_{y} has *C*_{*n*} symmetry wherein *n* = 2 or higher. The invention further provides a powder coating composition having a compound (a) and a curing agent (b), compound **(a)** being of the formula R(X)_{y} with *C*_{*n*} symmetry wherein *n* = 2 or higher and a T_{g} ≥ 30°C, wherein X is a carbamate functional group and y≥2.

### Background of the Invention

Powder coating compositions, especially thermosetting powder coatings, have been used to provide a variety of advantages in the coating of articles. Applied as dry, finely divided particles, powder coating compositions have several advantages as compared to conventional liquid solvent-based coatings.

Powder coating compositions provide many of the performance properties of traditional solvent based coating compositions without the complications of liquid organic solvents. In particular, the application and cure of powder coatings results in significantly reduced emissions of volatile organic compounds (VOC's) . Powder coatings are also more amenable to recycling than traditional liquid coatings. As a result, powder coating compositions have the potential for environmental and financial advantages.

However, powder coating compositions can present manufacturing, performance and/or application challenges.

For example, the manufacture and application of powder coatings requires the use of resins that are solid at approximately room temperature. The prior art has made numerous attempts to translate the manufacturing, performance and/or application advantages of liquid resins to solid resins suitable for use in powder coatings.

While progress has been made, there still exists a need for a powder coating resin having an advantageous blend of properties with respect to manufacturing, application and/or performance attributes.

Moreover, due to the particulate nature of powder coatings, higher films builds are sometimes required to obtain finished films having a satisfactorily smooth appearance and necessary distinctness of image (DOI). Such factors are disadvantageous with respect to cost and initial introduction concerns.

Traditional powder coating compositions, especially those used in clearcoat and topcoat applications, often utilize epoxy acid resin systems. Such systems often sacrifice scratch and mar resistance in order to obtain acceptable water resistance, chip resistance and etch resistance.

Powder coating composition processing typically requires the application of initial temperatures above the T_{g} of the powder resin(s), followed by application of temperatures sufficient to affect crosslinking if the coating is thermosetting. Thus, high cure schedules are often required. Application concerns and energy costs encourage the use of powder compositions having lower T_{g} resins. The use of lower T_{g} resins facilitates more rapid flow, improved appearance and lower cure temperatures.

However, storage and manufacturing problems can result when powder coating compositions having lower T_{g} resins are utilized. Manufacturing is particularly challenging, especially with commonly used acid epoxy resin systems. Agglomeration of the solid particulate component during storage may be observed.

Inferior film adhesion and/or cracking of the applied powder coating film during curing may occur, for example, when the powder coating is applied over a previously applied coating. These negative performance characteristics can be magnified by higher film builds and poor storage stability of the powder coating composition.

Finally, finished films obtained from powder coating compositions can exhibit variable gloss and/or inferior performance characteristics, particularly when balancing scratch and mar resistance against water resistance, chip resistance and etch resistance. It is often difficult to achieve an acceptable balance of properties among these characteristics, especially with traditional acid epoxy powder/powder coating resin systems employed as clearcoats or pigmented topcoats.

Thus, it is desirable to provide improved powder coating compositions wherein the foregoing disadvantages are either eliminated or are minimized. Prior art attempts hereto have been unsuccessful.

It is expected that the use of certain particulate carbamate functional resins in powder coatings will provide an advantageous balance of properties in regards to the foregoing disadvantages.

From EP 0 661 315 B1 and US 5,336,566 carbamate functional resins in powder coatings are known. From EP 0 661 315 B1 carbamate functional compounds of the formula R(X)₂ are known, in which the residues R have molecular weights that are much higher than 165. US 5,336,566 discloses carbamate functional compounds of formula R(X)₃. Carbamate functional compounds of the formula R(X)₂ are not disclosed.

### Summary of the invention

The invention provides a carbamate functional compound (a) of the formula R(X)_{y} having *C*_{*n*} symmetry wherein *n* = 2 or higher and a T_{g}≥ 30°C , wherein R has a molecular weight between 50 and 165 and wherein X is a carbamate functional group and y ≥ 2 and wherein R is selected from the group consisting of alkyl, cycloalkyl or aromatic containing groups having Cₙ symmetry wherein n = 2 or higher. The invention further provides a powder coating composition comprising a compound (a) and a curing agent (b), wherein compound (a) has a T_{g} ≥ 30°C and is of the formula R(X)_{y} having *C*_{*n*} symmetry wherein *n* = 2 or higher, and wherein X is a carbamate functional group, y ≥ 2.

### Detailed Description of the Invention

Solid particulate compound (a) is of the formula R(X)_{y}, wherein R has a molecular weight between 50 and 165, wherein X is a carbamate functional group, y = 2 or higher and wherein R is selected from the group consisting of alkyl, cycloalkyl or aromatic containing groups having Cₙ symmetry wherein n = 2 or higher.. :It is necessary for the practice of the invention that compound (a) have C_{*n*} symmetry wherein *n* = 2 or higher.

The compound of the invention is particularly suitable for use in powder coatings. While not wishing to be bound to a specific theory, the particular advantages of compound (a) and powder coatings incorporating compound (a) are believed to be due in part to the required C_{*n*} symmetry wherein *n* = 2 or higher.

The compound (a) of the invention will preferably have a molecular weight of from 350 to 1900 and most preferably from 460 to 900. The equivalent weight per carbamate functional group can range from 175 to 450 and preferably from 175 to 350.

Compound (a) is normally a solid at 25°C, the term "solid" referring to a substance of definite shape and relatively great density, low internal enthalpy, and greaf cohesion of its molecules. *Grant & Hackh's Chemical Dictionary*, *Fifth Edition McGraw-Hill, Inc. pg.541.*

In the formula R(X)_{y}, R is a divalent or polyvalent symmetrical linking group, X is a carbamate functional group, and y is 2 or higher. Thus, compound (a) is a carbamate functional compound having at least two carbamate groups. Preferably, compound (a) will have from 2 to 6 carbamate groups, i.e., y is a number from 2 to 6, and most preferably compound (a) will have 2 to 3 carbamate groups, i.e., y is 2 or 3.

R(X)_{y} must have a particular molecular symmetry, i.e., C_{*n*} symmetry wherein *n* = 2 or higher. As used herein, a molecule with symmetry means that certain parts of the molecule can be interchanged, via a symmetry operation, with others without altering either the identity or the orientation of the molecule. Put another way, "[a] molecule possesses a symemetry element if the application of the operation generated by the element leaves the molecule in an indistinguishable state.'' *Molecular Symmetry and Group Theory.* Alan Vincent, Wiley & Sons, NY, 1977, reprinted 1981, page 21.

Symmetry operations are geometrically defined ways of exchanging equivalent parts of a molecule. However, such operations are symmetry operations if, and only if, the appearance of the molecule is exactly the same relative to the pre- and post- symmetry operation view. Thus, the term "symmetrical" as used herein refers to a molecular having an appearance that appears identical relative to the pre- and post- symmetry operation views.

The instant application is concerned only with proper rotation symmetry operations. Proper rotation, also referred to as "*C*_{*n*} ", refers to simple rotation about an axis passing through the molecule by an angle *2π*/*n* or an angle 360°/*n*. A molecule is said to have a *C*_{*n*} symmetry element if after undergoing a proper rotation *C*_{*n*} operation, it's appearance is indistinguishable from it's appearance prior to undergoing the proper rotation *C*_{*n*} operation irrespective of conformational isomers. Put another way, a molecule possesses a symmetry element, in this case *C*_{*n*}, when one or more of its conformational isomers possesses that symmetry element. The highest symmetry element that belongs to any conformational isomer of the molecule is assigned to the molecule.

For example, the two most common conformational isomers of cyclohexane are the chair: 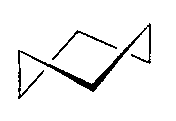 which has a C₃ proper rotation axis, and the boat conformation: 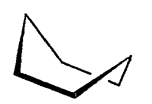 which has a C₂ proper rotation axis. As a result, cyclohexane may be defined as having a molecular C₃ proper rotation axis (*C*_{*n*} wherein *n* = *3*) without having to define its conformation.

Similarly, hexane, with the freedom of motion around its numerous single bounds can exist in a large number of configurations such as the one below:

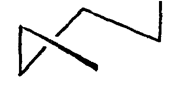

One of the conformational isomers of hexane (shown below) possesses a C₂ proper rotation axis. Therefor, hexane may be said to possess a *C*_{*n*} (Wherein *n* = 2) molecular symmetry element.

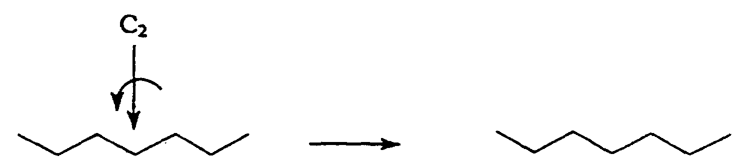

While it may be appreciated that all molecules have *C*_{*n*} symmetry where *n* is 1, the instant application is only concerned with R groups also having C_{*n*} symmetry where *n* is 2 or higher.
R is selected from the group consisting of an alkyl, a cycloalkyl or an aromatic group-containing structure having the required *C*_{*n*} symmetry. R may further comprise additional functional groups so long as the symmetry of R is maintained. For example, R may comprise functional groups comprising single, double, and/or triple bonds with atoms such as C, H, S, O, N and mixtures thereof. Illustrative examples of additional functional groups include ureas, ethers, esters, carbonates.

In the absence of additional functional groups, examples of illustrative R groups include C₄H₈ and C₆H₁₂. Other illustrative examples of suitable R groups . are 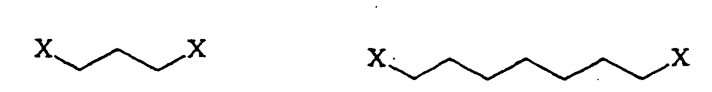 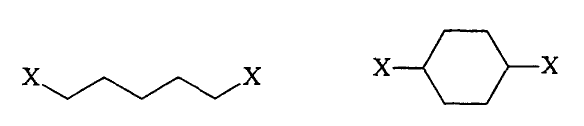 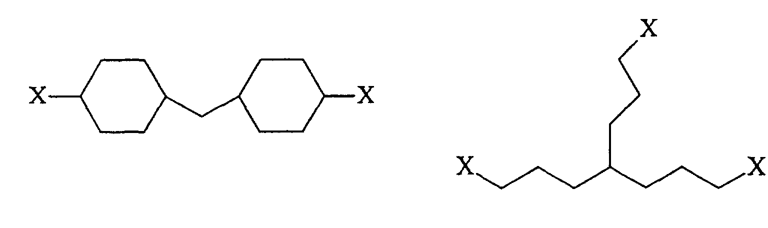 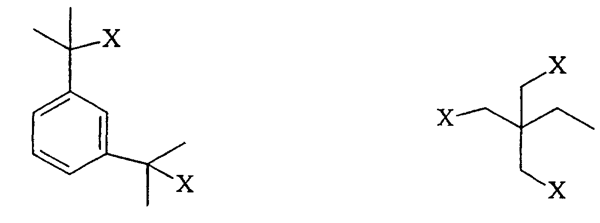 where "X" marks the location of a carbamate group.

Examples of R groups comprising additional functional groups include ureas such as 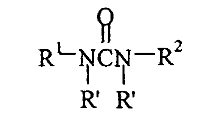 , ethers such as -R¹-O-R²-, and linear carbonates such as 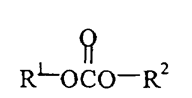 , wherein R¹ and R² are identical and are selected from the group consisting of alkyl or cycloalkyl groups having at least four carbons, and R' and R" are identical and are H or a C₁-C₄ alkyl. It will be appreciated that in each case, R¹ and R² are linked to carbamate groups X.

R¹ and R² may have, but are not required to have, *C*_{*n*} symmetry, so long as R(X)_{y} has the required *C*_{*n*} symmetry wherein *n* is 2 or higher. Preferably, R¹ and R² will be an alkyl group having from four to 12 carbons and most preferably, will be an alkyl group having from four to eight carbons, Examples of illustrative R¹ and R² groups include C₄H₈ and C₆H₁₂. A particularly preferred group is C₆H₁₂.

Another example of compound (a) is 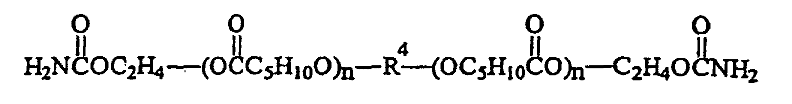 wherein R⁴ may be selected from the group consisting of alkyl, cycloalkyl, and aromatic-group containing structures.

Preferably, R will comprise a C₂-C₁₂ alkyl, group or cycloalkyl group. Examples of preferred R groups are hexane, butane, and 1,4 dimethylcyclohexane. Most preferably, R will be butane or hexane.

Carbamate group X may be a primary or secondary carbamate, wherein. all X's are identical. When carbamate group X is a secondary carbamate, i.e., 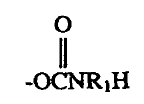 , then R₁ may be a C₁₋₄ alkyl group, with methyl and n-butyl alkyl groups being preferred. Most prefereably, X will be a primary carbamate group.

Compound (a) may be obtained via several methods.

A preferred method of obtaining a compound (a) having the formula R(X)y involves the reaction of a compound R(Y)ₙ with a compound Z, wherein R is as described above, Y is a functional group that can be converted into a carbamate group in one or more steps, n is two or more, and Z is a compound reactive with Y.

This method may be viewed as the transformation of the Y functionality into carbamate functionality in one or more reaction steps. For example, in some reaction schemes such as are described below, the reaction product of R(Y)ₙ + Z may subsequently be reacted with Z' to obtain R(X)_{y}. In other reaction schemes, the reaction product of [[R(Y)ₙ + Z] + Z' ] will be be reacted with Z". Multiple step reactions utilizing Z"' , are within the scope of the invention:

Functional groups suitable for use as Y include hydroxyl groups, alkene groups, cyclic carbonate functionality, epoxy groups, isocyanate functionality, aminoplast functionality and halides. Generally, Y will be selected from the group consisting of hydroxyl groups, cylic carbonate functionality, epoxy groups, isocyanate functionality, and halides. Preferred Y groups are hydroxyl, isocyanate, and cylic carbonate functionality. Hydroxyl groups are most preferred for use as Y.

Z may be a compound which can react with compound Y to produce a carbamate group or a group convertible to a carbamate via subsequent reaction steps. Alternatively, compound Z may be a compound having the formula Z^{L}-Q, wherein Z^{L} is a linking group which is reactive with compound Y, and Q is a carbamate group or a group convertible to a carbamate group.

It will be appreciated that the term "group convertible to a carbamate group" refers to those groups such as are discussed below as the precursors to a carbamate group and/or are as discussed in the review article from P. Adams and F. Baron, "Esters of Carbamic Acid", Chemical Review, v 65, 1965.

Examples of Z and/or Z', Z" are primary amines, secondary amines, ammonia, phosgene, isocyanates, peroxides, metal salts of hydroxy carbamates, carbon dioxide, hydroxycarbamates, and mixtures thereof.

For example, a compound R(Y)ₙ wherein Y is a cyclic carbonate group (e.g. the reaction product of an epoxy with carbon dioxide) can be converted into a carbamate group by the reaction of a primary or secondary amine or ammonia, i.e., Z. It will be appreciated that this reaction scheme further illustrates how Y can be an epoxy group where Z is carbon dioxide and Z' is the primary or secondary amine or ammonia.

A compound R(Y)ₙ wherein Y is a carbon-carbon double bond, can be converted into an epoxy following known techniques (e.g. reaction with peroxides), then transformed into a carbamate as shown above.

A compound R(Y)ₙ wherein Y is OH can be converted into a carbamate by way of reaction with phosgene followed by reaction with a primary or secondary amine or ammonia. Alternatively, when Y is hydroxy group, R(Y)ₙ can be reacted with a mono-functional isocyanate (Z).

When Y is an isocyanate group, it can be then be reacted with an isocyanate reactable carbamate (e.g., hydroxy ethyl carbamate, hydroxy propyl carbamate, aminoethyl carbamate). In this case, the isocyanate reactable carbamate is of the formula Z^{L}-Q.

When Y is a halide group (e.g. chlorine), R(Y)ₙ can be reacted with a Z which is a metal salt (e.g. sodium, lithium, etc.) of a hydroxy carbamate.

An R with carboxylic acid groups can be converted into an acid anhydride (e.g. reaction with acetic anhydride) to generate an acid anhydride that can then be reacted with a hydroxy carbamate or an amino carbamate

When Y is an aminoplast group (e.g. a carbamate group that has been reacted with an aldehyde or urea), Y can be reacted with a carbamate functional: vinyl, epoxy, cyclic carbonate, hydroxy, or carboxylic acid group, (i.e., Z^{L}-Q, wherein Z^{L} is the carbamate group and Q is the vinyl, epoxy, cyclic carbonate, hydroxy, or carboxylic acid group) and then be converted into a carbamate as described above.

It will be appreciated that the foregoing are illustrative only and that other suitable compounds such as are generally discussed above may be used to obtain a compound (a) of the invention having a formula R(X)_{y}.

The resin of the invention will typically be processed by accepted powder resin manufacturing technology, for example via sheet, roll or drop techniques. After solidifying, the resin is broken into particles having a desired size and shape. The average size and shape of the resin particles is dependent upon handling, processing, and equipment considerations.

Preferably, the resin will be in the shape of flat chips or discs having regular or irregular dimensions. Particles having an average particle size of from 2,54 to 7,62 cm (1 to 3 inches) are preferred, with average particle sizes of from 1 µm to up to 2,54 cm (1 inch) most preferred. Particle size as used herein refers to the average diameter of an object having irregular boundaries that can be determined with known test methods.

The compound (a) of the invention is curable upon combination with a curing agent (b) or a crosslinking agent (b). The powder coating of the invention results when compound (a) is combined with crosslinker (b), which is at least one particulate crosslinker which is reactive with the particulate compound (a). Optionally, one or more pigments, extenders, flow aids, catalysts, modifiers, regulators, additives, and/or degassing solvents may be incorporated to make the powder coating composition of the invention.

Curing agent (b) may be a compound having a plurality of functional groups that are reactive with compound (a) of the invention. Suitable reactive groups include active methylol or methylalkoxy groups on aminoplast crosslinking agents or on other compounds such as phenol/formaldehyde adducts, acrylamide groups, isocyanate groups, siloxane groups, cyclic carbonate groups, and anhydride groups.

Examples of curing agent (b) are melamine formaldehyde resin (including monomeric or polymeric melamine resin and partially or fully alkylated melamine resin), urea resins (e.g., methylol ureas such as urea formaldehyde resin, alkoxy ureas such as butylated urea formaldehyde resin), polymers having alkoxylated acrylamide groups, polymers having methylol or alkoxymethyl groups, polyanhydrides (e.g., polysuccinic anhydride), and polysiloxanes (e.g., trimethoxy siloxane). Monomeric and/or low oligomeric aminoplast resins such as melamine formaldehyde resins or urea formaldehyde resins are especially preferred.

To make the powder coating composition of the invention, crosslinker (b) will have at least one particulate crosslinker that is reactive with the particulate compound (a). An example of a suitable particulate crosslinker is PowderLink® resin, a crosslinking resin commercially available from Cytec of West Paterson, NJ and believed to be a glycol uril formaldehyde resin.

The ratio of equivalents of compound (a) to equivalents of curing agent (b) or crosslinking agent (b) is about from 0.5:1.0 (a:b) to 1.5:1.0, preferably from about 0.8:1.0 to 1.2:1.0.

The powder coating composition may be made according to known powder coating manufacturing techniques, i.e., premixing followed by dry blending or melt mixing. Melt mixing or extrusion is most preferred. After cooling, the resulting particles are subjected to grinding to a desired particle size distribution. Suitable particle size reduction or grinding methods include mechanical grinding or jet milling.
After particle size reduction processing, the powder coating will typically have an average particle size of from 0.1 to 100 µm, more preferably from 1 to 40 µm and most preferably, an average particle size of from 10 to 30 µm.

However, it will be appreciated that the desired particle size distribution of the powder coating is dependent upon the end use application, processing and/or application considerations.

The powder coating composition of the invention, after curing, will typically have a T_{g} of from 40°C to 205°C, more preferably a T_{g} of from 40°C to 120°C and most preferably a T_{g} of from 40°C to 80°C.

Particulate compound (a) of the invention will typically have a Tg within the foregoing ranges for the powder coating of the invention. However, it is possible for the T_{g} of particulate compound (a) to be higher than the above ranges. A mixture with other components of the powder coating may lower the T_{g} of the particulate compound (a) so that the powder coating of the invention has a T_{g} within 40°C to 205°C, more preferably a T_{g} of from 40°C to 120°C and most preferably a T_{g} of from 40°C to 80°C.

The powder coating of the invention may be applied according to accepted application techniques to a variety of substrates for use in various end use applications such as automotive, furniture, industrial, lawn and garden, appliances, electrical equipment.

Suitable substrates include metal, plastic, wood, ceramics, composites and mixtures thereof Metal and/or plastic substrates are preferred. Substrates will preferably be clean prior to application of the powder coating. Substrates may be optionally pretreated with phosphating, chromatizing and similar pretreatment methods to improve adhesion and/or appearance. It will be appreciated that pretreatment selection is dependent upon the desired substrate and end use application.

The powder coating of the invention may be applied by electrostatic spray, dipping the part in an electrostatic or non-electrostatic fluidized bed, or by flamespraying methods. Application by electrostatic spray is most preferred.

After application, the coated part is subjected to a cure schedule sufficient to effect flow and cure. As used herein, "cure schedule" refers to the time/temperature relationship required to effect complete curing of a thermosetting powder coating. Typical cure schedules for the powder coatings of the invention involve part temperatures of from 121 to 204°C (250 to 400°F) and time at part temperature of from 10 to 30 minutes. Preferred cure schedules are from 121 to 149°C (250 to 300°F) and time at part temperature of from 10 to 20 minutes.

The inventions are further described in the following nonlimiting examples.

### Example 1

### Preparation of compound (a) according to the invention.

A mixture of 157.7 parts of 1,6-hexanediol, 400 parts of methyl carbamate, and 655.4 parts of toluene were heated to reflux, approximately from 114 to 120°C. 3.6 parts of titanium (IV) isopropoxide was then added and the resulting methanol removed from the system. Upon completion of the reaction,

85 parts of deionized water was added and the dicarbamate isolated by vacuum distillation to provide a solid colorless product.

### Example 2

### Prophetic preparation of a compound (a) according to the invention.

A mixture of 157.7 parts of 1,6-hexanediol, 400 parts of methyl carbamate, and 655.4 parts of toluene are heated to reflux, approximately from 114 to 120°C. 3.6 parts of titanium (IV) isopropoxide is then added and the resulting methanol removed from the system. Upon completion of the reaction, 85 parts ofdeionized water are added and the dicarbamate is isolated by vacuum distillation. While still molten, 0.5 grams of Nacure 5225¹ are added. Upon cooling to ambient temperature, a solid colorless product is obtained.
¹a sulfonic acid catalyst, commercially available from King Industries.

### Example 3

### Prophetic preparation of a cured coating according to the invention.

124 parts of the resin from Example 1 is melted to liquid form by heating to a temperature of 110°C. The liquid is cooled to 60°C at which time 40 parts Resimene 747, (n aminoplast resin commercially available from Cytec) and 1 part dodecylbenzyl sulfonic acid is added. The components are mixed until homogenous at which time the liquid is drawn down into a thin layer. Upon cooling to ambient temperature (approximately 20-25°C), the liquid layer crystallizes to form a solid layer which upon heating (approximately 30 minutes at 120°C) provides a clear, hard and solvent resistant cured coating.

### Example 4

### Prophetic preparation of a powder coating composition according to the invention.

1000 Parts of the solid compound prepared in Example 2 are combined with 784 parts of Powderlink 1174 ( an aminoplast crosslinker, commercially available from Cytec) and mixed together in a closed mixing device. This mixture is then melt mixed by means of an extruder. The extrudate is fed onto a chill roller and then onto a cooling belt where it is rolled and then broken into chips. The chips are ground in a ACM mill commercially available form Hosokawa Mikron to an average particle size of 25 - 50 µm. The powder is applied electrostaticly over coated steel panels and baked 30 minutes at 163°C (325°F) to provide a cured glossy clear topcoat finish.

## Claims

1. A curable composition comprising a carbamate functional compound (a) of the formula R(X)₂ having Cₙ symmetry wherein n = 2 or higher and a Tg ≥ 30 °C, wherein R has a molecular weight between 50 and 165 and X is a carbamate functional group and wherein R is selected from the group consisting of alkyl, cycloalkyl or aromatic containing groups having Cₙ symmetry wherein n = 2 or higher.

2. The composition of claim 1 wherein n = 2.

3. The composition of claim 1 wherein R further comprises functional groups selected from the group consisting of vinyl groups, urea groups, ether groups, ester groups, and carbonate groups.

4. The composition of claim 1 wherein compound (a) is selected from the group consisting of 1,6 dicarbamate hexane, 1,4 dicarbamate butane, and 1,4 dicarbamate cyclohexane.

5. The composition of claim 1 wherein X is a primary carbamate group.

6. A curable coating composition comprising
(a) a carbamate functional compound (a) of the formula R(X)₂ having Cₙ symmetry wherein n = 2 or higher and a Tg ≥ 30 °C, wherein R has a molecular weight between 50 and 165 and X is a carbamate functional group and
(b) a curing agent,
wherein R is selected from the group consisting of alkyl, cycloalkyl or aromatic containing groups having Cₙ symmetry wherein n = 2 or higher.

7. The curable coating composition of claim 6 wherein n = 2.

8. The curable coating composition of claim 6 wherein R further comprises functional groups selected from the group consisting of vinyl groups, urea groups, ether groups, ester groups, and carbonate groups.

9. The curable coating composition of claim 6 wherein compound (a) is selected from the group consisting of 1,6 dicarbamate hexane, 1,4 dicarbamate butane, and 1,4 dicarbamate cyclohexane.

10. The composition of claim 6 wherein X is a primary carbamate group.

11. The curable coating composition of claim 6 wherein curing agent (b) comprises at least one particulate crosslinker (i) reactive with the particulate compound (a).

12. The curable coating composition of claim 11 wherein the at least one particulate crosslinker (i) reactive with the particulate compound (a) is an aminoplast resin or a glycol uril formaldehyde resin.

13. The curable coating composition according to anyone of the claims 6 to 12, which coating composition is a powder coating composition.

## Patentansprüche

1. Härtbare Zusammensetzung, enthaltend eine carbamatfunktionelle Verbindung (a) der Formel R(X)₂ mit Cₙ-Symmetrie, worin n = 2 oder mehr ist, und einer Tg ≥ 30°C, wobei R ein Molekulargewicht zwischen 50 und 165 aufweist, X für eine carbamatfunktionelle Gruppe steht und R aus der Gruppe bestehend aus alkyl-, cycloalkyl- oder aromatenhaltigen Gruppen mit Cₙ-Symmetrie, worin n = 2 oder mehr ist, stammt.

2. Zusammensetzung nach Anspruch 1, bei der n = 2 ist.

3. Zusammensetzung nach Anspruch 1, bei der R außerdem auch noch funktionelle Gruppen aus der Gruppe bestehend aus Vinylgruppen, Harnstoffgruppen, Ethergruppen, Estergruppen und Carbonatgruppen enthält.

4. Zusammensetzung nach Anspruch 1, bei der die Verbindung (a) aus der Gruppe bestehend aus 1,6-Dicarbamatohexan, 1,4-Dicarbamatobutan oder 1,4-Dicarbamatocyclohexan stammt.

5. Zusammensetzung nach Anspruch 1, bei der X für eine primäre Carbamatgruppe steht.

6. Härtbare Beschichtungszusammensetzung, enthaltend
(a) eine carbamatfunktionelle Verbindung (a) der Formel R(X)₂ mit Cₙ-Symmetrie, worin n = 2 oder mehr ist, und einer Tg ≥ 30°C, wobei R ein Molekulargewicht zwischen 50 und 165 aufweist und X für eine carbamatfunktionelle Gruppe steht, und
(b) einen Härter,
wobei R aus der Gruppe bestehend aus alkyl-, cycloalkyl- oder aromatenhaltigen Gruppen mit Cₙ-Symmetrie, worin n = 2 oder mehr ist, stammt.

7. Härtbare Beschichtungszusammensetzung nach Anspruch 6, bei der n = 2 ist.

8. Härtbare Beschichtungszusammensetzung nach Anspruch 6, bei der R außerdem auch noch funktionelle Gruppen aus der Gruppe bestehend aus Vinylgruppen, Harnstoffgruppen, Ethergruppen, Estergruppen und Carbonatgruppen enthält.

9. Härtbare Beschichtungszusammensetzung nach Anspruch 6, bei der die Verbindung (a) aus der Gruppe bestehend aus 1,6-Dicarbamatohexan, 1,4-Dicarbamatobutan oder 1,4-Dicarbamatocyclohexan stammt.

10. Härtbare Beschichtungszusammensetzung nach Anspruch 6, bei der X für eine primäre Carbamatgruppe steht.

11. Härtbare Beschichtungszusammensetzung nach Anspruch 6, bei der der Härter (b) mindestens einen teilchenförmigen Vernetzer (i), der gegenüber der teilchenförmigen Verbindung (a) reaktiv ist, aufweist.

12. Härtbare Beschichtungszusammensetzung nach Anspruch 11, bei der es sich bei dem.mindestens einen teilchenförmigen Vernetzer (i), der gegenüber der teilchenförmigen Verbindung (a) reaktiv ist, um ein Aminoplastharz oder ein Glykoluril-Formaldehyd-Harz handelt.

13. Härtbare Beschichtungszusammensetzung nach einem der Ansprüche 6 bis 12, bei der es sich um eine Pulverlackzusammensetzung handelt.

## Revendications

1. Composition durcissable comprenant un composé à fonction carbamate (a) de formule R(X)₂ possédant une symétrie Cₙ où n = 2 ou plus et une Tv ≥ 30°C, où R possède une masse moléculaire comprise entre .50 et.165 et X est un groupe fonctionnel carbamate et où R est choisi dans le groupe constitué par les groupes alkyle, cycloalkyle ou les groupes contenant un noyau aromatique possédant une symétrie Cₙ où n = 2 ou plus.

2. Composition selon la revendication 1 dans laquelle n = 2.

3. Composition selon la revendication 1 dans laquelle R comprend en outre des groupes fonctionnels choisis dans le groupe constitué par les groupes vinyle, les groupes urée, les groupes éther, les groupes ester et les groupes carbonate.

4. Composition selon la revendication 1 dans laquelle le composé (a) est choisi dans le groupe constitué par l'hexane-1,6-dicarbamate, le butane-1,4-dicarbamate et le cyclohexane-1,4-dicarbamate.

5. Composition selon la revendication 1 dans laquelle X est un groupe carbamate primaire.

6. Composition de revêtement durcissable comprenant
(a) un composé à fonction carbamate (a) de formule R(X)₂ possédant une symétrie Cₙ où n = 2 ou plus et une Tv ≥ 30°C, où R possède une masse moléculaire comprise entre 50 et 165 et X est un groupe fonctionnel carbamate et
(b) un agent durcisseur,
dans laquelle R est choisi dans le groupe constitué par les groupes alkyle, cycloalkyle ou les groupes contenant un noyau aromatique possédant une symétrie Cₙ où n = 2 ou plus.

7. Composition de revêtement durcissable selon la revendication 6 dans laquelle n =2.

8. Composition de revêtement durcissable selon la revendication 6 dans laquelle R comprend en outre des groupes fonctionnels choisis dans le groupe constitué par les groupes vinyle, les groupes urée, les groupes éther, les groupes ester et les groupes carbonate.

9. Composition de revêtement durcissable selon la revendication 6 dans laquelle le composé (a) est choisi dans le groupe constitué par l'hexane-1,6-dicarbamate, le butane-1, 4-dicarbamate et le cyclohexane-1,4-dicarb amate.

10. Composition selon la revendication 6 dans laquelle X est un groupe carbamate primaire.

11. Composition de revêtement durcissable selon la revendication 6 dans laquelle l'agent durcisseur (b) comprend au moins un agent de réticulation particulaire (i) réactif avec le composé particulaire (a).

12. Composition de. revêtement durcissable selon la revendication 11 dans laquelle ledit au moins un agent de réticulation particulaire (i) réactif avec le composé particulaire (a) est une résine aminoplaste ou une résine glycolurile-formaldéhyde.

13. Composition de revêtement durcissable selon l'une quelconque des revendications 6 à 12, cette composition de revêtement étant une composition de revêtement en poudre.
